# EUROPÄISCHE PATENTANMELDUNG

(11) **EP 1 998 076 A2**
(43) Veröffentlichungstag der Anmeldung: **03.12.2008**
(21) Anmeldenummer: 08005269.9
(22) Anmeldetag: 20.03.2008
(51) Int. Cl.: F16F 15/16

(54) **Torsionsschwingungsdämpferanordnung**

(30) Priorität: 01.06.2007 DE 102007025652
(71) Anmelder: ZF Friedrichshafen AG, 88038 Friedrichshafen (DE)
(72) Erfinder: Busold, Thomas, 36039 Fulda (DE); Dögel, Thomas, 97688 Bad Kissingen (DE); Orlamünder, Andreas, 97453 Schonungen (DE)

(57) **Zusammenfassung**

Eine Torsionsschwingungsdämpferanordnung umfasst eine Primärseite (12) und eine gegen die Wirkung einer Dämpferfluidanordnung (15) um eine Drehachse bezüglich der Primärseite (12) drehbare Sekundärseite (14), wobei die Dämpferfluidanordnung (15) in einer Mehrzahl von Verdrängungskammern (16, 18, 20, 22) ein erstes Dämpferfluid mit geringerer Kompressibilität und in wenigstens einer Ausgleichskammer (38) ein zweites Dämpferfluid mit höherer Kompressibilität aufweist, wobei bei durch Drehung der Primärseite (12) bezüglich der Sekundärseite (14) ausgelöster Verringerung des Volumens wenigstens einer Verdrängungskammer (16, 18, 20, 22) und dabei Verdrängung von erstem Fluid aus dieser wenigstens einen Verdrängungskammer (16, 18, 20, 22) das zweite Dämpferfluid in wenigstens einer Ausgleichskammer (38) komprimiert wird, wobei die Verdrängungskammern (16, 18, 20, 22) wenigstens eine erste Verdrängungskammer (16, 18) umfassen, deren Volumen bei Drehung der Primärseite (12) bezüglich der Sekundärseite (14) in einer ersten Relativdrehrichtung verringert wird, und wenigstens eine zweite Verdrängungskammer (20, 22) umfassen, deren Volumen bei Drehung der Primärseite (12) bezüglich der Sekundärseite (14) in einer zweiten Relativdrehrichtung verringert wird, ferner umfassend eine Umschaltventilanordnung (32), welche in einen ersten Schaltzustand bringbar ist, in welchem das in wenigstens einer Ausgleichskammer (38) enthaltene zweite Dämpferfluid im Wesentlichen nur durch erstes Dämpferfluid aus der wenigstens einen ersten Verdrängungskammer (16, 18) komprimierbar ist, und in einen zweiten Schaltzustand bringbar ist, in welchem das in dieser wenigstens einen Ausgleichskammer (38) enthaltene zweite Dämpferfluid im Wesentlichen nur durch erstes Dämpferfluid aus der wenigstens einen zweiten Verdrängungskammer (20, 22) komprimierbar ist.

## Beschreibung

Die vorliegende Erfindung betrifft eine Torsionsschwingungsdämpferanordnung, wie sie beispielsweise im Antriebsstrang eines Fahrzeugs eingesetzt werden kann. Eine derartige Torsionsschwingungsdämpferanordnung umfasst eine Primärseite und eine gegen die Wirkung einer Dämpferfluidanordnung um eine Drehachse bezüglich der Primärseite drehbare Sekundärseite, wobei die Dämpfertluidanordnung in einer Mehrzahl von Verdrängungskammern ein erstes Dämpferfluid mit geringerer Kompressibilität und in wenigstens einer Ausgleichskammer ein zweites Dämpferfluid mit höherer Kompressibilität aufweist, wobei bei durch Drehung der Primärseite bezüglich der Sekundärseite ausgelöster Verringerung des Volumens wenigstens einer Verdrängungskammer und dabei Verdrängung von erstem Fluid aus dieser wenigstens einen Verdrängungskammer das zweite Dämpferfluid in wenigstens einer Ausgleichskammer komprimiert wird, wobei die Verdrängungskammern wenigstens eine erste Verdrängungskammer umfassen, deren Volumen bei Drehung der Primärseite bezüglich der Sekundärseite in einer ersten Relativdrehrichtung verringert wird, und wenigstens eine zweite Verdrängungskammer umfassen, deren Volumen bei Drehung der Primärseite bezüglich der Sekundärseite in einer zweiten Relativdrehrichtung verringert wird.

Derartige auch als Gasfederzweimassenschwungräder bekannte Torsionsschwingungsdämpferanordnungen erfüllen ihre Schwingungsdämpfungsfunktionalität also dadurch, dass in wenigstens einer, im Allgemeinen in mehreren Ausgleichskammern enthaltenes vergleichsweise leicht komprimierbares zweites Dämpferfluid, das beispielsweise Gas, wie z.B. Luft, ist, durch das aus Verdrängungskammern verdrängte, im Allgemeinen inkompressible erste Dämpferfluid belastet wird. Diese Verdrängung aus einer Verdrängungskammer tritt dann auf, wenn die Primärseite und die Sekundärseite beispielsweise ausgehend von einer Neutralstellung bezüglich einander verdreht werden. Um dabei sowohl in Schubrichtung, als auch in Zugrichtung, also in beiden Relativdrehrichtungen der Primärseite bezüglich der Sekundärseite, eine Schwingungsdämpfungsfunktionalität vorzusehen, sind einige der Verdrängungskammern zum Verdrängen von erstem Dämpferfluid und damit Belasten von zugeordneten Ausgleichskammern aktiv, wenn ein Drehmoment von der Primärseite auf die Sekundärseite übertragen wird, also das System im Zugzustand ist. Andere Verdrängungskammern sind dann aktiv, wenn ein Drehmoment von der Sekundärseite auf die Primärseite übertragen wird, das System also in einem Schubzustand ist. Diesen verschiedenen Sätzen von Verdrängungskammern sind jeweils auch verschiedene Sätze von Ausgleichskammern zugeordnet, so dass im Zugzustand das Gas bzw. zweite Dämpferfluid in einem ersten Satz von Ausgleichskammern komprimiert wird, welche mit den auch im Zugzustand durch Volumenverringerung aktiven Verdrändungskammern zusammenwirken. Im Schubzustand sind dann andere Ausgleichskammern wirksam, nämlich diejenigen, die mit den Verdrängungskammern zusammenwirken, deren Volumen im Schubzustand verringert wird.

Eine derartige Anordnung führt dazu, dass je nachdem, in welcher Richtung ein Drehmoment zu übertragen ist, also auch in welcher Relativdrehrichtung die Primärseite und die Sekundärseite sich bezüglich einander verdrehen, jeweils nur ein Teil der Ausgleichskammern durch Kompression des darin enthaltenen zweiten Dämpferfluids zur Schwingungsdämpfung beitragen kann. Der andere Teil der Ausgleichskammern ist zumindest phasenweise inaktiv, was in jedem der beiden Relativdrehzustände tatsächlich zu einem vergleichsweise großen Totvolumen führt, das zur Schwingungsdämpfung nicht beitragen kann.

Es ist die Zielsetzung der vorliegenden Erfindung, eine derartige Torsionsschwingungsdämpferanordnung so auszugestalten, dass mit einer verbesserten Ausnutzung der vorhandenen Systembereiche ein verbessertes Schwingungsdämpfungsverhalten erzielt werden kann.

Erfindungsgemäß wird diese Aufgabe gelöst durch eine Torsionsschwingungsdämpferanordnung, umfassend eine Primärseite und eine gegen die Wirkung einer Dämpferfluidanordnung um eine Drehachse bezüglich der Primärseite drehbare Sekundärseite, wobei die Dämpferfluidanordnung in einer Mehrzahl von Verdrängungskammern ein erstes Dämpferfluid mit geringerer Kompressibilität und in wenigstens einer Ausgleichskammer ein zweites Dämpferfluid mit höherer Kompressibilität aufweist, wobei bei durch Drehung der Primärseite bezüglich der Sekundärseite ausgelöster Verringerung des Volumens wenigstens einer Verdrängungskammer und dabei Verdrängung von erstem Fluid aus dieser wenigstens einen Verdrängungskammer das zweite Dämpferfluid in wenigstens einer Ausgleichskammer komprimiert wird, wobei die Verdrängungskammern wenigstens eine erste Verdrängungskammer umfassen, deren Volumen bei Drehung der Primärseite bezüglich der Sekundärseite in einer ersten Relativdrehrichtung verringert wird, und wenigstens eine zweite Verdrängungskammer umfassen, deren Volumen bei Drehung der Primärseite bezüglich der Sekundärseite in einer zweiten Relativdrehrichtung verringert wird, ferner umfassend eine Umschaltventilanordnung, welche in einen ersten Schaltzustand bringbar ist, in welchem das in wenigstens einer Ausgleichskammer enthaltene zweite Dämpferfluid im Wesentlichen nur durch erstes Dämpferfluid aus der wenigstens einen ersten Verdrängungskammer komprimierbar ist, und einen zweiten Schaltzustand bringbar ist, in welchem das in dieser wenigstens einen Ausgleichskammer enthaltene zweite Dämpferfluid im Wesentlichen nur durch erstes Dämpferfluid aus der wenigstens einen zweiten Verdrängungskammer komprimierbar ist.

Bei der erfindungsgemäß aufgebauten Torsionsschwingungsdämpferanordnung wird also durch die Umschaltventilanordnung dafür gesorgt, dass beide Arten bzw. Sätze von Verdrängungskammern, also diejenigen Kammern deren Volumen im Schubzustand verringert wird, und diejenigen Kammern, deren Volumen im Zugzustand verringert wird, mit der bzw. den gleichen Ausgleichskammern zusammenwirken können. Dies bedeutet, dass beispielsweise alle vorhandenen Ausgleichskammern sowohl im Zugzustand als auch im Schubzustand aktiv sein können, was wiederum bedeutet, dass das tatsächlich zur Schwingungsdämpfung beitragende Volumen des zweiten Dämpferfluids deutlich vergrößert ist. Dies kann einerseits dazu genutzt werden, den erforderlichen Bauraum zu verringern, kann andererseits aber auf Grund des größeren Volumens des zweiten Dämpferfluids auch zur Erzeugung einer deutlich verbesserten Dämpfungscharakteristik genutzt werden.

Um in beiden Relativdrehrichtungen gleichmäßige Dämpfungseigenschaften bereithalten zu können, wird vorgeschlagen, dass jeweils eine erste Verdrängungskammer und eine zweite Verdrängungskammer ein Verdrängungskammerpaar bilden und dass die Umschaltventilanordnung in Zuordnung zu jedem Verdrängungskammerpaar ein Umschaltventil umfasst. Hier ist vorzugsweise vorgesehen, dass die erste Verdrängungskammer und die zweite Verdrängungskammer eines Verdrängungskammerpaares in Umfangsrichtung aufeinander folgen. Bei einer sehr bauraumeffizienten Anordnung kann dabei vorgesehen sein, dass die Umschaltventilanordnung in einem die erste Verdrängungskammer von der zweiten Verdrängungskammer trennenden Trennwandungsbereich vorgesehen ist.

Die Umschaltventilanordnung kann wenigstens ein in einem Ventilkörper verlagerbares Ventilorgan umfassen. Um eine von den Druck- bzw. Relativdrehzustandverhältnissen abhängige Umschaltcharakteristik in einfacher Weise realisieren zu können, wird vorgeschlagen, dass das wenigstens eine Ventilorgan von dem Druck des ersten Dämpferfluids in wenigstens einer ersten Verdrängungskammer und dem Druck des ersten Dämpferfluids in wenigstens einer zweiten Verdrängungskammer belastet ist. Dabei kann das Umschalten beispielsweise dadurch realisiert werden, dass das wenigstens eine Ventilorgan die Verbindung derjenigen Verdrängungskammer zu der wenigstens einen Ausgleichskammer freigibt, in welcher der höhere Druck des ersten Dämpferfluids vorhanden ist.

Das wenigstens eine Ventilorgan kann eine Ventilkugel sein.

Alternativ kann das wenigstens eine Ventilorgan ein Ventilschieber sein.

Dieser Ventilschieber kann einen Absperrbereich aufweisen, welcher in einer Ventilneutralstellung eine Fluidverbindung in Richtung Beaufschlagung des zweiten Dämpferfluids in der wenigstens einen Ausgleichskammer minimiert. Dabei ist vorzugsweise die Ausgestaltung des Ventilschiebers derart, dass in der Ventilneutralstellung die Fluidverbindung vollständig unterbrochen ist. Auf diese Art und Weise wird sichergestellt, dass ohne Drehmomentenbelastung die Primärseite und die Sekundärseite bezüglich einander auch in der Neutralrelativdrehlage verharren. Ferner kann einen ungewünschte Fluidleckage von einer ersten Verdrängungskammer zu einer zweiten Verdrängungskammer oder umgekehrt vermieden werden.

Bei einer alternativen Ausgestaltungsform kann vorgesehen sein, dass in der Ventilneutralstellung die wenigstens eine erste Verdrängungskammer und die wenigstens eine zweite Verdrängungskammer eine Fluidverbindung in Richtung Beaufschlagung des zweiten Dämpferfluids in der wenigstens einen Ausgleichskammer aufweisen. Dabei kann dann weiter vorgesehen sein, dass in der Ventilneutralstellung die wenigstens eine erste Verdrängungskammer und die wenigstens eine zweite Verdrängungskammer eine Fluidverbindung aufweisen. Bei dieser Ausgestaltung wird insbesondere in der Neutralrelativdrehlage für einen Druckausgleich zwischen den beiden Arten von Verdrängungskammern gesorgt.

Um dann, wenn bei auftretenden Drehmomenten die Primärseite und die Sekundärseite sich ausgehend von der Neutraldrehlage bezüglich einander verdrehen, sicherzustellen, dass jeweils nur eine der beiden Arten von Verdrängungskammern wirksam ist, wird vorgeschlagen, dass bei Auslenkung des Ventilschiebers aus der Ventilneutralstellung die Fluidverbindung der wenigstens einen ersten Verdrängungskammer oder der wenigstens einen zweiten Verdrängungskammer in Richtung Beaufschlagung des zweiten Dämpferfluids in der wenigstens einen Ausgleichskammer unterbrochen wird.

Der Ventilschieber kann in die Ventilneutralstellung vorgespannt sein.

Um die gewünschte Dämpfungscharakteristik einfach und zuverlässig erlangen zu können, wird vorgeschlagen, dass das zweite Dämpferfluid ein Gas, vorzugsweise Luft, ist und dass das erste Dämpferfluid eine Flüssigkeit, vorzugsweise Öl, ist.

Die vorliegende Erfindung betrifft ferner eine Torsionsschwingungsdämpferanordnung, umfassend eine Primärseite und eine gegen die Wirkung einer Dämpfertluidanordnung um eine Drehachse bezüglich der Primärseite drehbare Sekundärseite, wobei die Dämpferfluidanordnung in einer Mehrzahl von Verdrängungskammern ein erstes Dämpferfluid mit geringerer Kompressibilität und in wenigstens einer Ausgleichskammer ein zweites Dämpferfluid mit höherer Kompressibilität aufweist, wobei bei durch Drehung der Primärseite bezüglich der Sekundärseite ausgelöster Verringerung des Volumens wenigstens einer Verdrängungskammer und dabei Verdrängung von erstem Fluid aus dieser wenigstens einen Verdrängungskammer das zweite Dämpferfluid in wenigstens einer Ausgleichskammer komprimiert wird, wobei die Verdrängungskammern wenigstens eine erste Verdrängungskammer umfassen, deren Volumen bei Drehung der Primärseite bezüglich der Sekundärseite in einer ersten Relativdrehrichtung verringert wird, und wenigstens eine zweite Verdrängungskammer umfassen, deren Volumen bei Drehung der Primärseite bezüglich der Sekundärseite in einer zweiten Relativdrehrichtung verringert wird, wobei das zweite Dämpferfluid in wenigstens einer Ausgleichskammer durch das aus wenigstens einer ersten Verdrängungskammer verdrängte erste Dämpferfluid komprimierbar ist, wenn die Primärseite sich in der ersten Relativdrehrichtung bezüglich der Sekundärseite bewegt, und durch das aus wenigstens einer zweiten Verdrängungskammer verdrängte erste Dämpferfluid komprimierbar ist, wenn die Primärseite sich bezüglich der Sekundärseite in der zweiten Relativdrehrichtung bewegt.

Selbstverständlich können auch bei dieser Torsionsschwingungsdämpferanordnung alle vorangehend diskutierten Merkmale einzeln oder in Kombination realisiert sein.

Die vorliegende Erfindung wird nachfolgend mit Bezug auf die beiliegenden Figuren detailliert beschrieben. Es zeigt:
- Fig. 1: eine schaltbildartige Darstellung einer erfindungsgemäß aufgebauten Torsionsschwingungsdämpferanordnung;
- Fig. 2: eine Längsschnittansicht eines eine erfindungsgemäße Torsionsschwingungsdämpferanordnung aufweisenden Antriebsstrangs;
- Fig. 3: eine teilweise in Prinzipart dargestellte erfindungsgemäß aufgebaute Torsionsschwingungsdämpferanordnung im Querschnitt;
- Fig. 4: eine der Fig. 3 entsprechende Ansicht in vergrößerter Darstellung;
- Fig. 5: eine Detailansicht eines Umschaltventils mit Ventilschieber;
- Fig. 6: in vergrößerter Darstellung den Ventilschieber des in Fig. 5 gezeigten Umschaltventils;
- Fig. 7: eine der Fig. 5 entsprechende Ansicht einer alternativen Ausgestaltungsart eines Umschaltventils;
- Fig. 8: das in Fig. 7 dargestellte Umschaltventil im ausgelenkten Zustand des Ventilschiebers.

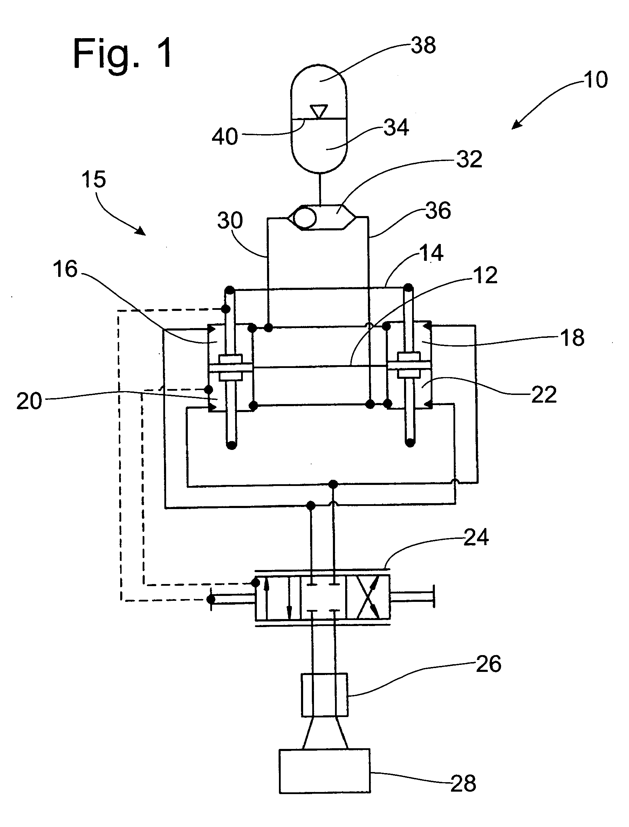

Die Fig. 1 zeigt in prinzipartiger Darstellung eine erfindungsgemäß aufgebaute Torsionsschwingungsdämpferanordnung 10. Diese umfasst prinzipartig dargestellt eine Primärseite 12 sowie eine ebenfalls prinzipartig dargestellte Sekundärseite 14, die, wie durch jeweilige Doppelpfeile angedeutet, bezüglich einander bewegbar sind, insbesondere um eine in der Fig. 1 nicht dargestellte Drehachse bezüglich einander drehbar sind. Die Primärseite 12 und die Sekundärseite 14 begrenzen jeweilige Verdrängungskammern 16, 18, 20, 22. Von diesen Verdrängungskammern 16, 18, 20, 22 werden im Folgenden die Verdrängungskammern 16 und 18 als erste Verdrängungskammern bezeichnet, während die Verdrängungskammern 20 und 22 als zweite Verdrängungskammern bezeichnet werden. Bei Relativbewegung der Primärseite 12 bezüglich der Sekundärseite 14 wird entweder das Volumen der ersten Verdrängungskammern 16, 18 verringert, während das Volumen der zweiten Verdrängungskammern 20, 22 zunimmt, oder es wird bei Bewegung in der entgegengesetzten Richtung das Volumen der zweiten Verdrängungskammern 20, 22 verringert und das Volumen der ersten Verdrängungskammern 16, 18 vergrößert. Über ein in der dargestellten Ausgestaltungsform in dem rotierenden Teil der Torsionsschwingungsdämpferanordnung angeordnetes Ansteuerventil 24 und eine Drehdurchführung 26 können, je nach Stellung des Ansteuerventils 24, entweder die ersten Verdrängungskammern 16, 18 oder die zweiten Verdrängungskammern 20, 22 in Verbindung mit einer Druckfluidquelle 28 gebracht werden, die beispielsweise eine Fluidpumpe und ein Fluidreservoir umfassen kann. Diese Druckfluidquelle 28 liefert unter Druck stehendes erstes Dämpferfluid, das beispielsweise eine ölartige Flüssigkeit sein kann. Durch die gezielte Zufuhr bzw. Ableitung von derartigem unter Druck stehenden ersten Dämpferfluid aus den ersten Verdrängungskammern 16, 18 oder den zweiten Verdrängungskammern 20, 22 kann aktiv auf den Bewegungszustand von Primärseite 12 und Sekundärseite 14 eingewirkt werden, um auftretenden Drehschwingungen, die im Allgemeinen zu einer Auslenkung der Primärseite 12 bezüglich der Sekundärseite 14 ausgehend aus einer Neutralrelativdrehlage bzw. einem momentan eingenommenen, drehmomentenabhängigen Relativdrehzustand führen. Die Verdrängungskammern 16, 18, 20, 22 sowie die damit zusammenwirkenden Ausgleichskammern 38 bzw. die darin bereits enthaltenen Fluide bilden einen wesentlichen Bestandteil einer allgemein mit 15 bezeichneten Dämpferfluidanordnung.

Die beiden ersten Verdrängungskammern 16, 18 sind über ein allgemein mit 30 bezeichnetes Verbindungssystem und eine Umschaltventilanordnung 32 in Verbindung mit einer oder mehreren Druckübertragungskammern 34. In entsprechender Weise sind bzw. können die zweiten Verdrängungskammern 20, 22 über ein Verbindungssystem 36 und die Umschaltventilanordnung 32 in Verbindung mit einer Druckübertragungskammer oder den Druckübertragungskammern 34 sein bzw. gebracht werden. Eine oder mehrere Ausgleichskammern 38 sind durch ein druckabhängig verlagerbares Trennorgan 40, beispielsweise einen Kolben oder eine Membran o.dgl., von der bzw. den Druckübertragungskammern 34 getrennt. Eine Druckveränderung in den Verbindungssystemen 30 bzw. 36 und mithin der Druckübertragungkammer 34 führt bei ansteigendem Druck zu einer entsprechenden Verschiebung des Trennorgans 40 der jeweiligen Ausgleichskammern 38 mit der Folge, dass darin enthaltenes zweites Dämpferfluid stärker komprimiert wird. Dieses zweite Dämpferfluid ist ein Gas, beispielsweise Luft, und weist im Vergleich zum ersten Dämpferfluid eine deutlich größere Kompressibilität auf. Eine Druckabnahme führt entsprechend zu einer Vergrößerung der Volumina der Ausgleichskammern 38 bei entsprechender Entspannung bzw. Volumenzunahme des darin enthaltenen zweiten Dämpferfluids.

Die Ausgestaltung der Umschaltventilanordnung 32 ist derart, dass abhängig davon, ob in den ersten Verdrängungskammern 16, 18 oder in den zweiten Verdrängungskammern 20, 22 der jeweils vorherrschende Druck des ersten Dämpferfluids größer ist, die Verbindung desjenigen Verbindungssystems 30 oder 36 zu der bzw. den Druckübertragungskammern 34 freigegeben wird, in dessen zugeordneten Verdrängungskammern 16, 18 oder 20, 22 der größere Druck vorherrscht. Sind beispielsweise durch Relativbewegung der Primärseite 12 bezüglich der Sekundärseite 14 die Volumina der ersten Verdrängungskammern 16, 18 verringert, während entsprechend die Volumina der zweiten Verdrängungskammern 20, 22 vergrößert sind, jeweils bezüglich einer Neutralrelativdrehlage der Primärseite 12 bezüglich der Sekundärseite 14, so ist auch der Druck in den ersten Verdrängungskammern 16, 18 größer. Die Umschaltventilanordnung 32 stellt dann eine Verbindung her zwischen dem Verbindungssystem 30 und der bzw. den Druckübertragungskammern 34. Bewegen sich die Primärseite 12 und die Sekundärseite 14 dann in der entgegengesetzten Richtung bezüglich einander, so wird allmählich der Druck in den ersten Verdrängungskammern 16, 18 abnehmen, während der Druck in den zweiten Verdrängungskammern 20, 22 zunimmt. Ist der Zustand erreicht, in welchem der Druck in den zweiten Verdrängungskammern 20, 22 den Druck in den ersten Verdrängungskammern 16, 18 übersteigt, wird die Umschaltventilanordnung 32 umschalten und das Verbindungssystem 36 mit der bzw. den Druckübertragungskammern 34 und somit auch den Ausgleichskammern 34 verbinden.

Man erkennt aus der vorangehenden Beschreibung der prinzipartigen Darstellung einer erfindungsgemäßen Torsionsschwingungsdämpferanordnung, dass die bzw. jede darin enthaltene Ausgleichskammer 38 bzw. das darin enthaltene zweite Dämpferfluid mit allen Verdrängungskammern, also sowohl den ersten Verdrängungskammern 16, 18, als auch den zweiten Verdrängungskammern 20, 22, zusammenwirken kann. D.h., die bzw. alle Ausgleichskammern 38 können sowohl bei Relativbewegung der Primärseite 12 bezüglich der Sekundärseite 14 in einer ersten Relativverdrängungskammer, als auch bei Relativbewegung in einer entgegengesetzten zweiten Relativbewegungsrichtung wirksam sein. Die Folge davon ist, dass für jeden Bewegungszustand das gesamte Volumen des in den Ausgleichskammern 38 enthaltenen zweiten Dämpferfluids genutzt werden kann. Dies führt zu einer sehr effizienten Ausnutzung des insbesondere für die Ausgleichskammern 38 genutzten Volumens und gestattet eine deutlich besser an die auftretenden Anforderungen angepasste Auslegung einer Federkennlinie.

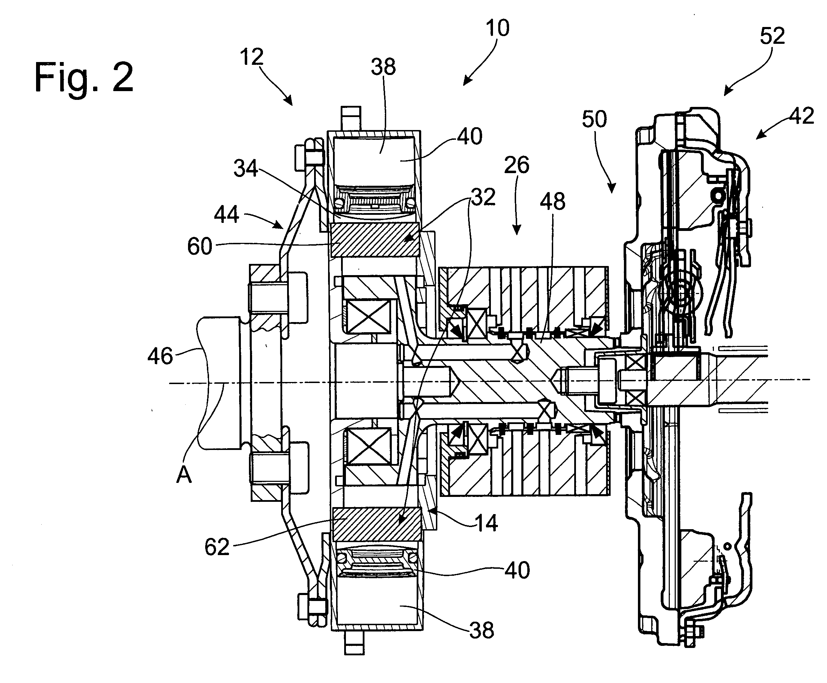

Die Fig. 2 zeigt eine erfindungsgemäß ausgebildete Torsionsschwingungsdämpferanordnung 10 eingegliedert in einen Antriebsstrang 42. Man erkennt, dass die Primärseite 12 über eine Kopplungsbaugruppe 44 an eine Antriebswelle 46 angebunden und somit mit dieser um eine Drehachse A drehbar ist. Die Sekundärseite 14 ist über ein mit dieser rotierendes Teil 48 der Drehdurchführung 26 an den Eingangsbereich 50 einer herkömmlich aufgebauten Reibungskupplung 52 angebunden.

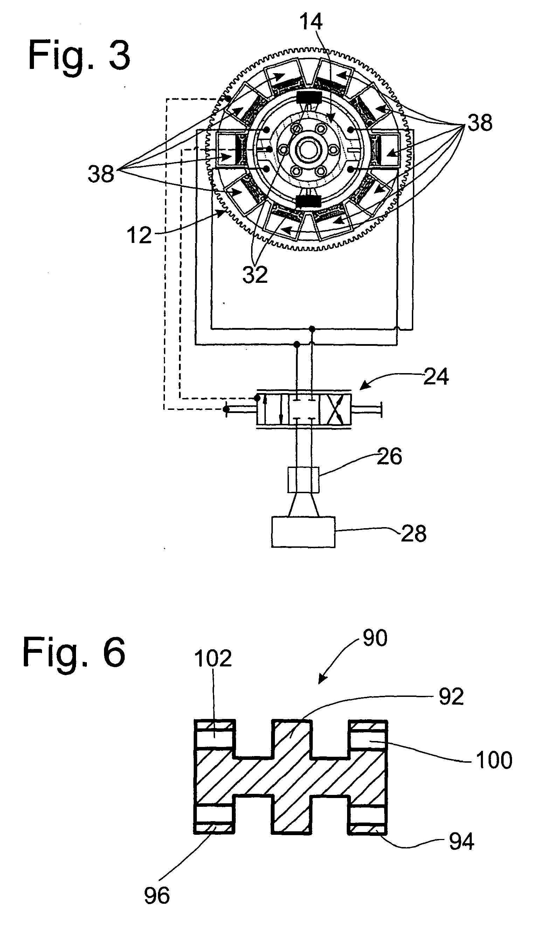

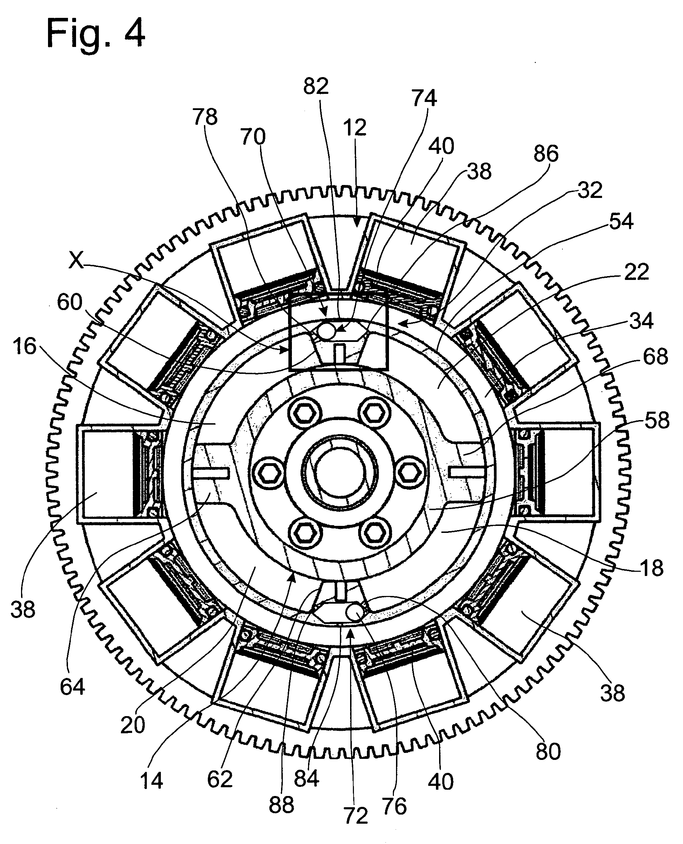

Wie man auch in den Fig. 3 und 4 erkennt, begrenzt die Primärseite 12 mit einem zylindrischen Abschnitt 54 radial außen die in Umfangsrichtung aufeinander folgenden Verdrängungskammern 16, 18, 20, 22. Radial außerhalb des zylindrischen Abschnitts 54 ist eine in Umfangsrichtung durchlaufend ausgebildete Druckübertragungskammer 34 vorgesehen. Die sternförmig um die Druckübertragungskammer 34 angeordneten Ausgleichskammern 38 sind zur Druckübertragungskammer 56 durch die Trennorgane 40, hier ausgebildet als im Wesentlichen radial verschiebbare Kolben, getrennt.

Ein zylindrischer Abschnitt 58 der Sekundärseite 14 begrenzt die Verdrängungskammern 16, 18, 20, 22 nach radial innen. Sowohl an dem zylindrischen Abschnitt 54, als auch an dem zylindrischen Abschnitt 58 sind jeweils nach radial innen bzw. radial außen sich erstreckend und mit einem Winkelabstand von 180° Trennwandungsbereiche 60, 62 bzw. 64, 68 vorgesehen. Zwischen den in Umfangsrichtung aufeinander folgenden Trennwandungsbereichen 60 und 64 ist die Verdrängungskammer 16 begrenzt. Zwischen den in Umfangsrichtung aufeinander folgenden Trennwandungsbereichen 64, 62 ist die Verdrängungskammer 20 begrenzt. Zwischen den Trennwandungsbereichen 62 und 68 ist die Verdrängungskammer 18 begrenzt, und zwischen den Trennwandungsbereichen 68 und 60 ist die Verdrängungskammer 22 begrenzt.

Verdreht sich bei der in Fig. 4 dargestellten Positionierung die Sekundärseite 14 im Uhrzeigersinn bezüglich der Primärseite 12, führt dies zu einer Verringerung des Volumens der bezüglich der Drehachse einander gegenüber liegenden ersten Verdrängungskammern 16, 18, während das Volumen der der bezüglich der Drehachse einander gegenüber liegenden zweiten Verdrängungskammern 20, 22 zunimmt. Bei Drehung im Gegenuhrzeigersinn nimmt entsprechend das Volumen der zweiten Verdrängungskammern 20, 22 ab, während das Volumen der ersten Verdrängungskammern 16, 18 zunimmt. Ferner sind über in der Fig. 4 auch erkennbare Kanäle in dem Drehdurchführungsteil 48, das mit der Primärseite 14 rotiert, die verschiedenen Verdrängungskammern 16, 18, 20, 22 in Verbindung mit der Drehdurchführung 26 und somit auch der Druckfluidquelle 28.

Die Umschaltventilanordnung 32 umfasst in Zuordnung zu jedem Paar, jeweils umfassend eine erste Verdrängungskammer 16 bzw. 18 und eine zweite Verdrängungskammer 20 bzw. 22, Umschaltventile 70, 72. Das Umschaltventil 70, das in dem im Rechteck eingezeichneten Detail X enthalten ist, ist also dem die beiden Verdrängungskammern 16 und 22 umfassenden Verdrängungskammerpaar zugeordnet. Das in der Fig. 4 unten liegende Umschaltventil 72 ist dem die erste Verdrängungskammer 18 und die zweite Verdrängungskammer 20 umfassenden Verdrängungskammerpaar zugeordnet.

Die beiden Umschaltventile 70, 72 sind in den an der Primärseite 12, also dem zylindrischen Abschnitt 54 derselben vorgesehenen Trennwandungsbereichen 60, 62 angeordnet und stellen, ähnlich wie vorangehend mit Bezug auf die Fig. 1 dargelegt, jeweils entweder eine Verbindung zwischen den ersten Verdrängungskammern 16, 18 und der Druckausgleichskammer 34 her, so dass das in den ersten Verdrängungskammern 16, 18 enthaltene bzw. aus diesen in die Druckübertragungskammer 34 verdrängte erste Dämpferfluid über die Trennorgane 40 auf das in den Ausgleichskammern 38 enthaltene zweite Dämpferfluid einwirken kann bzw. der so generierte Druck des ersten Dämpferfluids die Kompression des zweiten Dämpferfluids beeinflusst. In einer jeweils anderen Schaltstellung der beiden Umschaltventile 70, 72 beeinflusst der in den zweiten Verdrängungskammern 20, 22 vorhandene Fluiddruck über die dann vorhandene Verbindung zur Druckübertragungskammer 34 die Beaufschlagung der Trennorgane 40 und somit die Kompression des in den Ausgleichskammern 38 enthaltenen zweiten Dämpferfluids. In dem in der Fig. 4 dargestellten Zustand verschließen hier als Ventilkugeln ausgebildete Ventilorgane 74 bzw. 76 jeweilige Verbindungskanäle 78, 80, die ansonsten über in die Druckübertragungskammer 34 führende Kanäle 82, 84 eine Verbindung herstellen würden, so dass in der in Fig. 4 dargestellten Positionierung Verbindungskanäle 86, 88 über die Kanäle 82, 84 eine Verbindung der zweiten Verdrängungskammern 20, 22 mit der Druckübertragungskammer 34 herstellen. Der in den zweiten Verdrängungskammern 20, 22 vorhandene bzw. durch Verdrängung von Fluid aus diesen definierte Druck, welcher in diesem Zustand dann den Druck in den ersten Verdrängungskammern 16, 18 überwiegt, definiert die Beaufschlagung des zweiten Dämpferfluids in den Ausgleichskammern 38. Dabei bilden also im Wesentlichen die Verbindungskanäle 78, 80 das in der Fig. 1 bereits erläuterte Verbindungssystem 30, während die Verbindungskanäle 86, 88 im Wesentlichen das Verbindungssystem 36 definieren.

Je nachdem, ob der Druck in den ersten Verdrängungskammern 16, 18 oder den zweiten Verdrängungskammern 20, 22 größer ist, werden die Ventilorgane 74, 76 entweder die Verbindungskanäle 78, 80 abschließen, oder die Verbindungskanäle 86, 88 abschließen.

Man erkennt aus der vorangehenden Beschreibung, dass mit dem beschriebenen Aufbau alle um die Druckübertragungskammer 34 herum angeordnete Ausgleichskammern 38 unabhängig davon, in welchem Relativdrehzustand die Primärseite 12 und die Sekundärseite 14 bezüglich einander sind, durch Belastung ihres zweiten Dämpferfluids zur Schwingungsdämpfung beitragen können.

Bei der mit Bezug auf die Fig. 1 bis 4 beschriebenen Ausgestaltungsform einer erfindungsgemäßen Torsionsschwingungsdämpferanordnung 10 sind die beiden Umschaltventile 70, 72 der Umschaltventilanordnung 32 als Kugelventile ausgestaltet, bei welchen die Ventilkugeln 76, 78 als Ventilorgane in dem zylindrischen Abschnitt 54 der Sekundärseite 14 im Bereich der Wandungsbereiche 60, 62 druckabhängig hin- und herbewegbar sind zwischen zwei Schaltstellungen, in welchen entweder die ersten Verdrängungskammern 16, 18 oder die zweiten Verdrängungskammern 20, 22 in Verbindung mit der Druckübertragungskammer 34 sind.

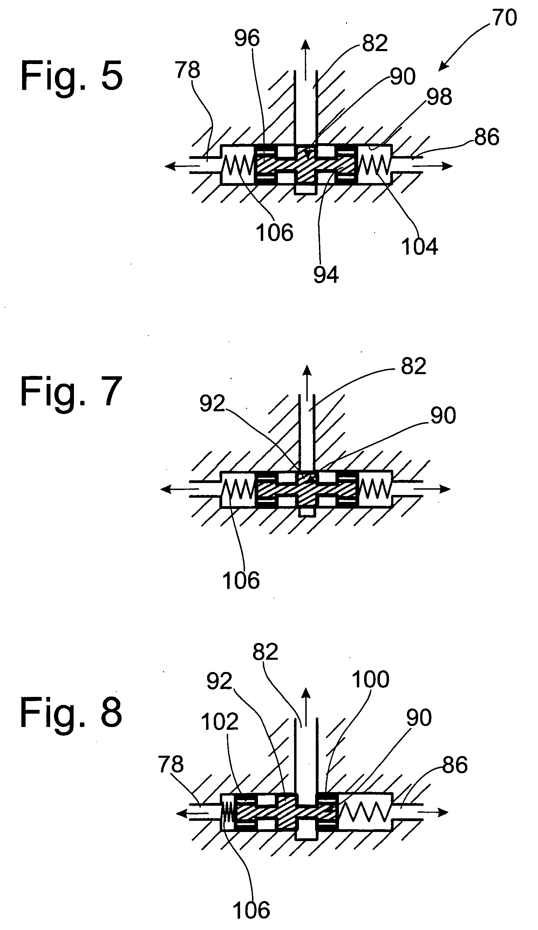

In Fig. 5 ist beispielsweise anhand des Umschaltventils 70 eine Ausgestaltungsform gezeigt, bei welchen ein Ventilschieber 90 hin- und herbewegbar ist, um entweder den Verbindungskanal 78 in Verbindung mit dem Kanal 82 zu bringen, oder den Verbindungskanal 86 in Verbindung mit dem Kanal 82 zu bringen. Es ist selbstverständlich, dass eine entsprechende Ausgestaltung auch bei dem anderen Umschaltventil 72 gewählt sein kann. Der in Fig. 6 vergrößert dargestellte Ventilschieber 90 weist in einem zentralen Bereich einen Absperrbereich 92 auf, der, wie dies die Fig. 5 zeigt, bei in einer Ventilneutralstellung sich befindendem Ventilschieber den Kanal 82 abschließt. Gezeigt ist hier eine neutrale Überdeckung, also eine Anordnung, bei welcher die Abmessung des Absperrbereichs 92 im Wesentlichen der Abmessung des Kanals 82 entspricht. Befindet sich der Ventilschieber 90 in der Ventilneutraistellung, ist somit die Fluidverbindung zwischen beiden Verbindungskanälen 78, 68 und dem Kanal 82 unterbrochen. Zwei Federn 94, 96 spannen den Ventilschieber 90 in die in Fig. 5 gezeigte Ventilneutralstellung vor. Um eine definierte Führung des Ventilschiebers 90 in der ihn aufnehmenden zylindrischen Öffnung 98 beispielsweise im Wandungsbereich 60 zu erlangen, sind beidseits des Absperrbereichs 92 Führungsbereiche 94, 96 vorgesehen. Um den Fluidaustausch mit den Verbindungskanälen 78, 86 zu ermöglichen, sind in diesen Durchtrittsöffnungen 100, 102 ausgebildet. Ferner erkennt man in Fig. 5 zwei Vorspannfedern 104, 106, welche in beiden Endbereichen den Ventilschieber 90 beaufschlagen und ihn in die Ventilneutralstellung vorspannen. Wird beispielsweise der Fluiddruck des ersten Dämpferfluids in der ersten Verdrängungskammer 16 erhöht, so überträgt sich dieser erhöhte Fluiddruck über den Verbindungskanal 78 auf den Ventilschieber 90 und verschiebt diesen entgegen der Vorspannung der Feder 104 in der Darstellung der Fig. 5 nach rechts. Bei Erhöhung des Fluiddrucks in der zweiten Verdrängungskammer 22 verschiebt sich dementsprechend der Ventilschieber 90 entgegen der Vorspannung der Feder 106 in der Darstellung der Fig. 5 nach links.

Durch die in der Fig. 5 erkennbare neutrale Überdeckung des Kanals 82 ist dafür gesorgt, dass in keiner Ventilstellung bzw. auch keiner Relativdrehstellung der Primärseite 12 bezüglich der Sekundärseite 14 eine direkte Verbindung zwischen den paarweise einander zugeordneten Verdrängungskammern 16 und 22 bzw. 20 und 18 vorliegen kann. Um die Gefahr auch in kleinster Fluidleckage zwischen diesen einander paarweise zugeordneten Verdrängungskammern weiter zu minimieren, kann, wie dies in Fig. 7 dargestellt ist, der Ventilschieber 90 mit seinem Absperrbereich 92 bezüglich des dadurch abzuschließenden Kanals 82 eine positive Überdeckung haben. Dies bedeutet, dass in der Verschieberichtung der Absperrbereich 92 eine größere Erstreckungslänge aufweist, als der abzuschließende Kanal 82 bzw. die abzuschließende Öffnung. In Fig. 8 ist der Zustand gezeigt, in welchem in der Verdrängungskammer 82 der Fluiddruck bezüglich der Verdrängungskammer 16 erhöht worden ist, also in der Darstellung der Fig. 4 die Sekundärseite 14 im Gegenuhrzeigersinn bezüglich der Primärseite 14 verdreht worden ist. Dementsprechend ist der erhöhte Fluiddruck über den Verbindungskanal 86 auch auf den Ventilschieber 90 übertragen worden, so dass dieser entgegen der Vorspannwirkung der Feder 106 verschoben worden ist und über die Druchtrittsöffnungen 100 eine Verbindung zwischen dem Verbindungskanal 86 und dem Kanal 82 und somit der Verdrängungskammer 22 und der Druckübertragungskammer 56 hergestellt ist.

Es sei darauf hingewiesen, dass der Ventilschieber 90 auch mit negativer Überdeckung bezüglich der durch diesen abzuschließenden Öffnung ausgebildet sein kann. Dies bedeutet, dass auch bei in der Ventilneutraistellung positioniertem Ventilschieber 90 der Abperrbereich 92 die Mündungsöffnung des Kanals 82 nicht vollständig überdeckt. In dieser Positionierung besteht dann sowohl vom Verbindungskanal 86 als auch vom Verbindungskanal 78 eine Fluidaustauschverbindung zum Kanal 82 und über diesen auch eine direkte Fluidaustauschverbindung zwischen den Verbindungskanälen 78, 86 und somit den paarweise einander zugeordneten Verdrängungskammern 16 und 22 bzw. 20 und 18. Somit kann dann, wenn die Primärseite 12 und die Sekundärseite 14 in ihrer Neutralrelativdrehlage sind, also beispielsweise kein Drehmoment zu übertragen ist, ein Druckausgleich zwischen den paarweise einander zugeordneten und in verschiedenen Relativdrehzuständen zur Druckerhöhung wirksamen Verdrängungskammern erfolgen. Erst dann, wenn in einer dieser Kammern der Druck bedingt dadurch, dass die Primärseite 12 und die Sekundärseite 14 bezüglich einander gedreht werden, ansteigt, wird der Ventilschieber 90 verschoben, so dass der Verbindungsströmungsquerschnitt zwischen dem dieser Kammer zugeordneten Verbindungskanal und dem Kanal 82 vergrößert wird, während der Strömungsverbindungsquerschnitt zwischen dem anderen Verbindungskanal und dem Kanal 82 verringert wird und schließlich ein vollständiger Abschluss stattfindet. Es ist dann dafür gesorgt, dass bei anliegendem Drehmoment bzw. zu übertragenden Drehschwingungen immer nur entweder eine erste Verdrängungskammer oder eine zweite Verdrängungskammer eines jeweiligen Paares von Verdrängungskammern in Verbindung mit dem Kanal 82 und somit der Druckübertragungskammer 34 ist.

Es sei abschließend darauf hingewiesen, dass selbstverständlich bei den gezeigten Ausgestaltungsvarianten verschiedenste Änderungen vorgenommen werden können, ohne vom Prinzip der vorliegenden Erfindung abzuweichen. So könnte selbstverständlich bei den Darstellungen der Fig. 5 bis 8 der Ventilschieber eine andere Ausgestaltung haben bzw. mit jeweils mehreren Kanälen bzw. Verbindungskanälen verschiedener Verdrängungskammern zusammenwirken. Auch ist es selbstverständlich möglich, dass die Ausgleichskammern 38 bzw. der diese bildende gehäuseartige Abschnitt der Primärseite 12 mit anderer geometrischer Konfiguration ausgebildet sein könnte. Auch könnten selbstverständlich die Verdrängungskammern 38 sekundärseitig liegen.

## Patentansprüche

1. Torsionsschwingungsdämpferanordnung, umfassend eine Primärseite (12) und eine gegen die Wirkung einer Dämpferfluidanordnung (15) um eine Drehachse bezüglich der Primärseite (12) drehbare Sekundärseite (14), wobei die Dämpferfluidanordnung (15) in einer Mehrzahl von Verdrängungskammern (16, 18, 20, 22) ein erstes Dämpferfluid mit geringerer Kompressibilität und in wenigstens einer Ausgleichskammer (38) ein zweites Dämpferfluid mit höherer Kompressibilität aufweist, wobei bei durch Drehung der Primärseite (12) bezüglich der Sekundärseite (14) ausgelöster Verringerung des Volumens wenigstens einer Verdrängungskammer (16, 18, 20, 22) und dabei Verdrängung von erstem Fluid aus dieser wenigstens einen Verdrängungskammer (16, 18, 20, 22) das zweite Dämpferfluid in wenigstens einer Ausgleichskammer (38) komprimiert wird, wobei die Verdrängungskammern (16, 18, 20, 22) wenigstens eine erste Verdrängungskammer (16, 18) umfassen, deren Volumen bei Drehung der Primärseite (12) bezüglich der Sekundärseite (14) in einer ersten Relativdrehrichtung verringert wird, und wenigstens eine zweite Verdrängungskammer (20, 22) umfassen, deren Volumen bei Drehung der Primärseite (12) bezüglich der Sekundärseite (14) in einer zweiten Relativdrehrichtung verringert wird, ferner umfassend eine Umschaltventilanordnung (32), welche in einen ersten Schaltzustand bringbar ist, in welchem das in wenigstens einer Ausgleichskammer (38) enthaltene zweite Dämpferfluid im Wesentlichen nur durch erstes Dämpferfluid aus der wenigstens einen ersten Verdrängungskammer (16, 18) komprimierbar ist, und in einen zweiten Schaltzustand bringbar ist, in welchem das in dieser wenigstens einen Ausgieichskammer (38) enthaltene zweite Dämpferfluid im Wesentlichen nur durch erstes Dämpferfluid aus der wenigstens einen zweiten Verdrängungskammer (20, 22) komprimierbar ist.

2. Torsionsschwingungsdämpferanordnung nach Anspruch 1,
**dadurch gekennzeichnet, dass** jeweils eine erste (16, 18) Verdrängungskammer (20, 22) und eine zweite Verdrängungskammer ein Verdrängungskammerpaar bilden und dass die Umschaltventilanordnung (32) in Zuordnung zu jedem Verdrängungskammerpaar ein Umschaltventil (70, 72) umfasst.

3. Torsionsschwingungsdämpferanordnung nach Anspruch 2,
**dadurch gekennzeichnet, dass** die erste Verdrängungskammer (16, 18) und die zweite Verdrängungskammer (20, 22) eines Verdrängungskammerpaares in Umfangsrichtung aufeinander folgen.

4. Torsionsschwingungsdämpferanordnung nach Anspruch 2 oder 3,
**dadurch gekennzeichnet, dass** die Umschaltventilanordnung (32) in einem die erste Verdrängungskammer (16, 18) von der zweiten Verdrängungskammer (20, 22) trennenden Trennwandungsbereich (60, 62) vorgesehen ist.

5. Torsionsschwingungsdämpferanordnung nach einem der Ansprüche 1 bis 4,
**dadurch gekennzeichnet, dass** die Umschaltventilanordnung (32) wenigstens ein in einen Ventilkörper (54) verlagerbares Ventilorgan (76, 78; 90) umfasst.

6. Torsionsschwingungsdämpferanordnung nach Anspruch 5,
**dadurch gekennzeichnet, dass** das wenigstens eine Ventilorgan (76, 78; 90) von dem Druck des ersten Dämpferfluids in wenigstens einer ersten Verdrängungskammer (16, 18) und dem Druck des ersten Dämpferfluids in wenigstens einer zweiten Verdrängungskammer (20, 22) belastet ist.

7. Torsionsschwingungsdämpferanordnung nach Anspruch 6,
**dadurch gekennzeichnet, dass** das wenigstens eine Ventilorgan (76, 78; 90) die Verbindung derjenigen Verdrängungskammer (16, 18, 20, 22) zu der wenigstens einen Ausgleichskammer (38) freigibt, in welcher der höhere Druck des ersten Dämpferfluids vorhanden ist.

8. Torsionsschwingungsdämpferanordnung nach einem der Ansprüche 5 bis 7,
**dadurch gekennzeichnet, dass** das wenigstens eine Ventilorgan (76, 78) eine Ventilkugel (76, 78) ist.

9. Torsionsschwingungsdämpferanordnung nach einem der Ansprüche 5 bis 7,
**dadurch gekennzeichnet, dass** das wenigstens eine Ventilorgan (90) ein Ventilschieber (90) ist.

10. Torsionsschwingungsdämpferanordnung nach einem der Ansprüche 9,
**dadurch gekennzeichnet, dass** der Ventilschieber (90) einen Absperrbereich (92) aufweist, welcher in einer Ventilneutralstellung eine Fluidverbindung in Richtung Beaufschlagung des zweiten Dämpferfluids in der wenigstens einen Ausgleichskammer (38) minimiert.

11. Torsionsschwingungsdämpferanordnung nach Anspruch 10,
**dadurch gekennzeichnet, dass** in der Ventilneutralstellung die Fluidverbindung vollständig unterbrochen ist.

12. Torsionsschwingungsdämpferanordnung nach Anspruch 10,
**dadurch gekennzeichnet, dass** in der Ventilneutraistellung die wenigstens eine erste Verdrängungskammer (16, 18) und die wenigstens eine zweite Verdrängungskammer (20, 22) eine Fluidverbindung in Richtung Beaufschlagung des zweiten Dämpferfluids in der wenigstens einen Ausgleichskammer aufweisen.

13. Torsionsschwingungsdämpferanordnung nach Anspruch 12,
**dadurch gekennzeichnet, dass** in der Ventilneutralstellung die wenigstens eine erste Verdrängungskammer (16, 18) und die wenigstens eine zweite Verdrängungskammer (20, 22) eine Fluidverbindung aufweisen.

14. Torsionsschwingungsdämpferanordnung nach Anspruch 12 oder 13,
**dadurch gekennzeichnet, dass** bei Auslenkung des Ventilschiebers (90) aus der Ventilneutraistellung die Fluidverbindung der wenigstens einen ersten Verdrängungskammer (16, 18) oder der wenigstens einen zweiten Verdrängungskammer (20, 22) in Richtung Beaufschlagung des zweiten Dämpferfluids in der wenigstens einen Ausgleichskammer (38) unterbrochen wird.

15. Torsionsschwingungsdämpferanordnung nach einem der Ansprüche 10 bis 14,
**dadurch gekennzeichnet, dass** der Ventilschieber (90) in die Ventilneutralstellung vorgespannt ist.

16. Torsionsschwingungsdämpferanordnung nach einem der Ansprüche 1 bis 15,
**dadurch gekennzeichnet, dass** das zweite Dämpferfluid ein Gas, vorzugsweise Luft, ist und dass das erste Dämpferfluid eine Flüssigkeit, vorzugsweise Öl, ist.

17. Torsionsschwingungsdämpferanordnung, umfassend eine Primärseite (12) und eine gegen die Wirkung einer Dämpferfluidanordnung (15) um eine Drehachse bezüglich der Primärseite (12) drehbare Sekundärseite (14), wobei die Dämpferfluidanordnung (15) in einer Mehrzahl von Verdrängungskammern (16, 18, 20, 22) ein erstes Dämpferfluid mit geringerer Kompressibilität und in wenigstens einer Ausgleichskammer (38) ein zweites Dämpferfluid mit höherer Kompressibilität aufweist, wobei bei durch Drehung der Primärseite (12) bezüglich der Sekundärseite (14) ausgelöster Verringerung des Volumens wenigstens einer Verdrängungskammer (16, 18, 20, 22) und dabei Verdrängung von erstem Fluid aus dieser wenigstens einen Verdrängungskammer (16, 18, 20, 22) das zweite Dämpferfluid in wenigstens einer Ausgleichskammer (38) komprimiert wird, wobei die Verdrängungskammern (16, 18, 20, 22) wenigstens eine erste Verdrängungskammer (16, 18) umfassen, deren Volumen bei Drehung der Primärseite (12) bezüglich der Sekundärseite (14) in einer ersten Relativdrehrichtung verringert wird, und wenigstens eine zweite Verdrängungskammer (20, 22) umfassen, deren Volumen bei Drehung der Primärseite (12) bezüglich der Sekundärseite (14) in einer zweiten Relativdrehrichtung verringert wird, wobei das zweite Dämpferfluid wenigstens einer Ausgleichskammer durch das aus wenigstens einer ersten Verdrängungskammer verdrängte erste Dämpferfluid komprimierbar ist, wenn die Primärseite sich in der ersten Relativdrehrichtung bezüglich der Sekundärseite bewegt, und durch das aus wenigstens einer zweiten Verdrängungskammer verdrängte erste Dämpferfluid komprimierbar ist, wenn die Primärseite sich bezüglich der Sekundärseite in der zweiten Relativdrehrichtung bewegt.
